(19) Europäisches Patentamt
European Patent Office
Office européen des brevets

(11) **EP 4 524 415 A1**

(12) **EUROPEAN PATENT APPLICATION**
published in accordance with Art. 153(4) EPC

(43) Date of publication:
**19.03.2025 Bulletin 2025/12**

(21) Application number: **23859931.0**

(22) Date of filing: **31.07.2023**

(51) International Patent Classification (IPC):
**F16C 19/06** (2006.01)     **F16C 33/38** (2006.01)

(52) Cooperative Patent Classification (CPC):
**F16C 19/06; F16C 33/38**

(86) International application number:
**PCT/JP2023/027955**

(87) International publication number:
**WO 2024/048162 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.08.2022   JP 2022135962**
**29.08.2022   JP 2022135965**

(72) Inventors:
• **TSUJIMURA Nao**
**Kuwana-shi, Mie 511-0867 (JP)**
• **KAWAMURA Mitsuo**
**Kuwana-shi, Mie 511-0867 (JP)**
• **SAKAGUCHI Tomoya**
**Kuwana-shi, Mie 511-0867 (JP)**

(74) Representative: **Eder Schieschke & Partner mbB**
**Patentanwälte**
**Elisabethstraße 34**
**80796 München (DE)**

(71) Applicant: **NTN Corporation**
**Osaka-shi Osaka 530-0005 (JP)**

(54) **ROLLING BEARING**

(57)     Provided is a rolling bearing (1) in which, when an area enclosed by a line connecting outer edges of a scatter diagram obtained by plotting innumerable positions, at which a cage (5) located at a neutral position is allowed to exist without contact with balls (4), on a two-dimensional coordinate system is defined as a cage movable area (10), a ratio Ri/Re of a maximum inscribed circle diameter Ri of the cage movable area (10) to a minimum circumscribed circle diameter Re of the cage movable area (10) is set to be equal to or smaller than 0.900.

FIG. 3

EP 4 524 415 A1

EP 4 524 415 A1

## Description

Technical Field

The present invention relates to a rolling bearing.

Background Art

In a rolling bearing including: a pair of raceway rings (inner ring and outer ring) that rotate relative to each other through intermediation of a plurality of rolling elements under a state of being arranged so as to be opposed to each other in a radial direction; and an annular cage that retains the plurality of rolling elements at intervals in a circumferential direction, the cage is normally incorporated between the inner ring and the outer ring under a state of being movable in the radial direction and the circumferential direction. Therefore, the cage, which is located at a neutral position, defines a radial clearance between each raceway ring and the cage, and defines a radial clearance and a circumferential clearance between the cage and each rolling element accommodated in an accommodation portion (pocket) for the rolling element. The above-mentioned radial clearance between the raceway ring and the cage is referred to as "guiding clearance," and the above-mentioned radial clearance and circumferential clearance between the pocket and the rolling element are also referred to as "pocket radial clearance" and "pocket circumferential clearance," respectively. However, for example, in a rolling bearing that adopts a cage in which a shape of the pocket is uniform in the radial direction, there is no "pocket radial clearance" (the pocket radial clearance is infinite).

Rolling bearings are broadly classified into a "rolling element guide type" and a "raceway ring guide type." In a rolling bearing of the rolling element guide type, the pocket radial clearance is smaller than the guiding clearance, and radial movement of the cage is restricted by contact between an inner surface (pocket surface) of the pocket and the rolling element. Thus, there is no contact between the cage and the raceway rings. Meanwhile, a rolling bearing of the raceway ring guide type is a rolling bearing in which the guiding clearance is smaller than the pocket radial clearance. In the rolling bearing of the raceway ring guide type, in a case in which the guiding clearance is smaller than the pocket circumferential clearance, when the cage moves from the neutral position in the radial direction, the cage first comes into contact with the raceway ring. In a case in which the guiding clearance is larger than the pocket circumferential clearance, when the rolling elements are arranged evenly, the cage first comes into contact with the rolling elements when the cage moves in the radial direction. However, when the rolling elements are not arranged evenly, a movable range of the cage changes, and hence the cage may come into contact with the raceway ring. Which one of the rolling element guide type or the raceway ring guide type is to be applied to the rolling bearing (or which one of the rolling element guide type or the raceway ring guide type is to be adopted as a guide system of the cage) is selected as appropriate in accordance with applications and the like of the rolling bearing.

When the rolling bearing is in operation (when the inner ring and the outer ring rotate relative to each other), a frictional force, which is generated when the cage and the rolling elements accommodated in the pockets of the cage come into contact with each other, may cause a high-speed whirling phenomenon of the cage, which is also referred to as "high-speed whirl phenomenon" and causes problems such as abnormal noise, vibration, increased torque, and heat generation, as well as occurrence of fatal problems such as breakage of the cage.

In view of the foregoing, for example, in Patent Literature 1 below, with a predetermined degree of imbalance being given to the cage, the cage is capable of performing eccentric rotation. Further, a part of the cage is always brought into contact with the outer ring or the rolling element during rotation, and thus occurrence of the high-speed whirl phenomenon and occurrence of problems such as abnormal noise and vibration, which are caused by the high-speed whirl phenomenon, are prevented as much as possible.

Citation List

Patent Literature:

JP 2011-196513 A

Summary of Invention

Technical Problem

However, the technical measures (invention) for preventing occurrence of the high-speed whirl phenomenon as described in Patent Literature 1 are considered to be unsuitable for rolling bearings that adopt an inner ring guide system as a guide system of the cage (see paragraph 0036 in Patent Literature 1), and its practical scope of application is limited to rolling bearings that adopt an outer ring guide system or a rolling element guide system as the guide system of the cage. Further, a contact surface pressure of a contact portion tends to increase along with an increase in the number of rotations, and hence the technical measures described in Patent Literature 1 are considered to be unsuitable for rolling bearings of a high-speed rotation type in which a dmn value, which is expressed as a product of a pitch circle diameter [mm] and the number of rotations [rpm] of the bearing, exceeds a predetermined value. However, the high-speed whirl phenomenon may also occur in rolling bearings that are considered to be difficult to apply the technical measures described in Patent Literature 1, that is, rolling bearings of the inner ring guide system and rolling bearings of the raceway ring guide system and high-speed rotation type.

In view of the above-mentioned circumstances, a first object of the present invention is to provide measures for preventing a high-speed whirl phenomenon, which can be widely applied to rolling bearings in general regardless of a guide system of a cage, the number of rotations (dmn value) of a bearing, and the like.

Further, a second object of the present invention is to provide a rolling bearing of a raceway ring guide type, which can prevent occurrence of a high-speed whirl phenomenon as much as possible.

Solution to Problem

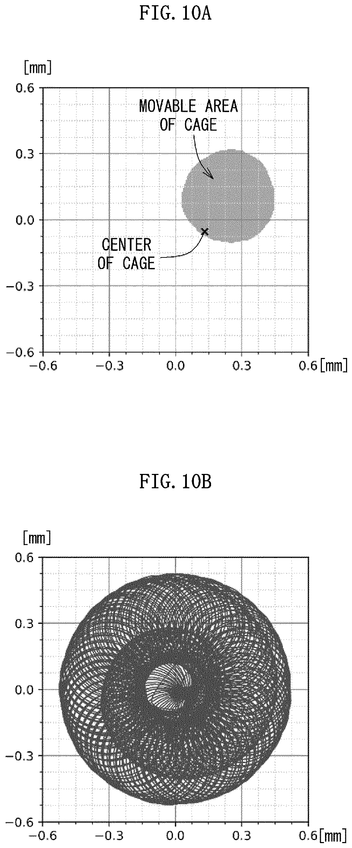

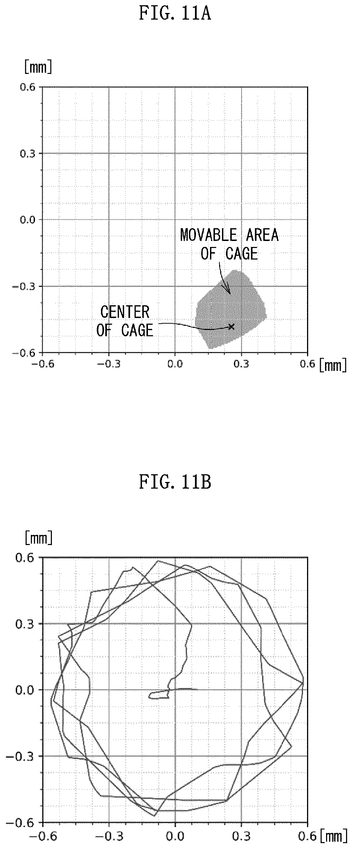

As described above, a cage is normally incorporated between an inner ring and an outer ring under a state of being movable in a radial direction and a circumferential direction, and a movement range of the cage is limited to the smallest clearance among a guiding clearance, a pocket radial clearance, and a pocket circumferential clearance. Therefore, once positions of the raceway rings and each rolling element are determined, it is possible to estimate an area in which a cage center can exist geometrically based on arrangement and shapes of pockets (the cage can move without coming into contact with the outer ring, the inner ring, and the rolling elements), that is, a "cage movable area." Accordingly, the inventors of the present invention have conducted kinetic analysis under various conditions, and have found that, under analysis conditions recognized as causing occurrence of the high-speed whirl phenomenon, a shape of the cage movable area was a circle or a regular polygon approximating to a circle, whereas under analysis conditions recognized as not causing occurrence of the high-speed whirl phenomenon, the shape of the cage movable area is a "distorted shape" that deviates from a circle or a regular polygon approximating to a circle. The above findings are described based on the analysis results shown in FIG. 10A to FIG. 10D and FIG. 11A to FIG. 11D.

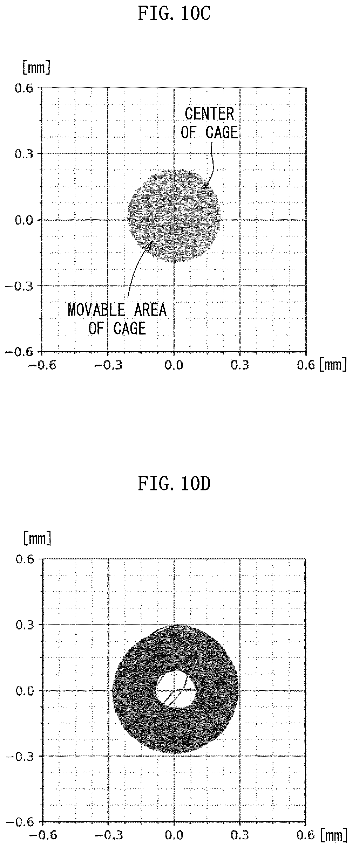

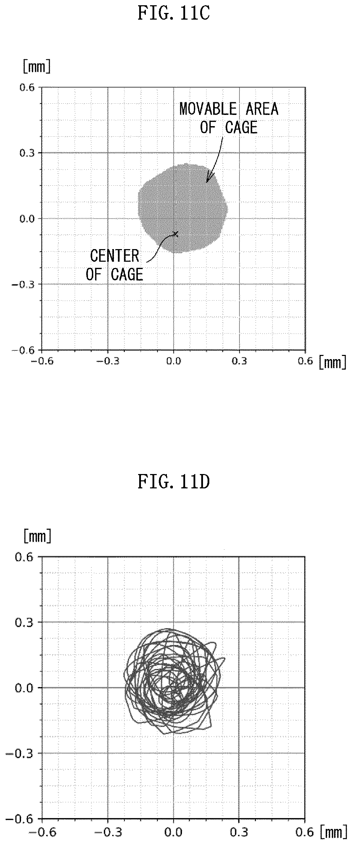

First, FIG. 10A, FIG. 10C, FIG. 11A, and FIG. 11C each show the "cage movable area" and a "center position of the cage" at the moment after 2.5 rotations of the inner ring, and FIG. 10B, FIG. 10D, FIG. 11B, and FIG. 11D each show a movement trajectory of a center of the cage during 10 rotations of the inner ring of each of the rolling bearings in which the movable areas exhibit the shapes shown in FIG. 10A, FIG. 10C, FIG. 11A, and FIG. 11C, respectively. When the shape of the cage movable area is a circle as shown in FIG. 10A and FIG. 10C, or a regular polygon approximating to a circle, the high-speed whirl phenomenon occurs, and as a result, the line showing the movement trajectory of the center of the cage becomes extremely dense as shown in FIG. 10B and FIG. 10D. In contrast, when the shape of the cage movable area is a distorted shape as shown in FIG. 11A and FIG. 11C, the high-speed whirl phenomenon does not occur, and as a result, the line showing the movement trajectory of the center of the cage becomes extremely sparse as shown in FIG. 11B and FIG. 11D. The first invention of the present application has been devised based on this finding.

That is, according to the first invention of the present application devised in order to achieve the above-mentioned object, there is provided a rolling bearing, comprising: an inner ring and an outer ring configured to rotate relative to each other through intermediation of a plurality of rolling elements; and a cage having a plurality of pockets, which are formed at intervals in a circumferential direction, and are configured to accommodate the rolling elements individually and respectively. When an area enclosed by a line connecting outer edges of a scatter diagram obtained by plotting innumerable positions, at which the cage is allowed to exist without contact with the inner ring, the outer ring, and the rolling elements, on a two-dimensional coordinate system is defined as a cage movable area, a ratio $Ri/Re$ of a maximum inscribed circle diameter $Ri$ of the cage movable area to a minimum circumscribed circle diameter $Re$ of the cage movable area is equal to or smaller than 0.900.

The fact that the above-mentioned ratio $Ri/Re$ is equal to or smaller than 0.900 means that the shape of the cage movable area is a distorted shape that deviates from a circle or a regular polygon approximating to a circle. Therefore, from the results of verification by the inventors of present invention, the rolling bearing having the above-mentioned configuration can effectively prevent occurrence of the high-speed whirl phenomenon. Although it is not possible to determine a detailed reason why forming the shape of the cage movable area into the distorted shape is effective in preventing occurrence of the high-speed whirl phenomenon, based on the analysis results shown in FIG. 11A and FIG. 11C, the following assumption may be made. Specifically, when the cage is displaced to a position at which the shape of the movable area is the distorted shape, a frictional force, which is generated between the pocket surface and the rolling element to serve as a driving force of the high-speed whirl phenomenon, acts in a direction of inhibiting motion. In other words, in order to cause the high-speed whirl phenomenon, it is considered that the direction of the force acting on the cage is required to rotate like the hands of a clock and always act as an acceleration of circular motion, and it may be assumed that distorting the shape of the movable area can prevent this action.

Further, in the first invention, unlike the technical measures proposed in Patent Literature 1, a specific region of the cage does not always come into contact with the outer ring or the rolling elements. Therefore, the first invention of the present application can be applied to various rolling bearings regardless of the guide system of the cage.

In the configuration described above, in order to set the ratio Ri/Re to be equal to or smaller than 0.900, for example, each of the plurality of pockets provided in the cage may be formed as one of a large pocket and a small pocket that are different from each other in circumferential dimension (opening dimension in the circumferential direction).

The large pocket may comprise a plurality of large pockets. In this case, it is preferred that large pocket groups each comprising an array with one or more large pockets (with two or more large pockets in a row) be arranged at equal intervals in the circumferential direction. For example, when the number of the rolling elements is 10, the pockets are arranged in the order of large, large, small, small, small, large, large, small, small, and small. With this configuration, occurrence of problems such as vibration caused by mass imbalance in the cage can be prevented as much as possible.

A difference in circumferential dimension between the large pocket and the small pocket may be equal to or larger than 0.1 mm. In other words, the high-speed whirl phenomenon of the cage in the rolling bearing can be effectively prevented simply by appropriately arranging large pockets and small pockets that are slightly different from each other in circumferential dimension. A difference in circumferential dimension between the large pockets and the small pockets is changed as appropriate in accordance with various parameters such as the total number of rolling elements (pockets) and a bearing size.

Further, as described above, in the rolling bearing of the raceway ring guide type, the radial movement of the cage is restricted by contact between (guiding surface of) the raceway ring and (guided surface of) the cage, and hence it is possible to estimate by simulation an area in which the center of the cage can exist geometrically based on, for example, the shapes of the guiding surface and the guided surface, in other words, an area in which the cage can move without coming into contact with the raceway ring (guide ring) (hereinafter, this area is referred to as "cage movable area"). As a result of extensive studies conducted by the inventors of the present invention, the following has been found. Specifically, under the analysis conditions recognized as causing occurrence of the high-speed whirl phenomenon, as the shape of the cage movable area becomes closer to a perfect circle, the high-speed whirl phenomenon is more liable to occur. Conversely, as the shape of the cage movable area becomes more different from a circle (perfect circle) to become the "distorted shape," the high-speed whirl phenomenon is less liable to occur. The second invention of the present application has been devised based on this finding.

That is, according to the second invention of the present application devised in order to achieve the above-mentioned second object, there is provided a rolling bearing, comprising: an inner ring and an outer ring configured to rotate relative to each other through intermediation of a plurality of rolling elements; and a cage having a plurality of pockets, which are formed at intervals in a circumferential direction, and are configured to accommodate the rolling elements individually and respectively, the cage comprising an annular guided surface configured to be guided by an annular guiding surface provided on an inner peripheral surface of the outer ring or an outer peripheral surface of the inner ring. A radial clearance formed between the guiding surface and the guided surface is smaller than a radial clearance formed between a pocket inner surface of the cage and the rolling element. When an area enclosed by a line connecting outer edges of a scatter diagram obtained by plotting innumerable positions, at which the cage located at a neutral position is allowed to exist without contact with the inner ring, the outer ring, and the rolling elements, on a two-dimensional coordinate system, is defined as a cage movable area, a ratio Ri/Re of a maximum inscribed circle diameter Ri of the cage movable area to a minimum circumscribed circle diameter Re of the cage movable area is smaller than 0.990.

The fact that the above-mentioned ratio Ri/Re is equal to or smaller than 0.990 means that the shape of the cage movable area is a distorted shape that deviates from a circle or a regular polygon approximating to a circle. Therefore, from the results of verification by the inventors of present invention, the rolling bearing having the above-mentioned configuration can effectively prevent occurrence of the high-speed whirl phenomenon. Although it is not possible to determine a detailed reason why forming the shape of the cage movable area into the distorted shape is effective in preventing occurrence of the high-speed whirl phenomenon, such assumption may be made that this is because forming the cage movable area into the distorted shape causes a direction of a frictional force, which is generated when the guiding surface and the guided surface come into contact with each other, to deviate from a circular raceway, thereby being incapable of continuously accelerating whirling motion of the cage. In other words, in order to cause the high-speed whirl phenomenon, the direction of the force acting on the cage is required to rotate like the hands of a clock and always act as an acceleration of circular motion, and it may be assumed that distorting the shape of the movable area can prevent this action.

Further, unlike the technical measures proposed in Patent Literature 1, the technical measures adopted in the second invention are not provided to intentionally increase the imbalance of the cage. Thus, there is no fear of an increase in centrifugal force or an increase in NRRO of a shaft due to the imbalance even when the present invention is applied to the rolling bearing (in particular, rolling bearing of the raceway ring guide type). For this reason, the second invention can be widely applied to rolling bearings of the raceway ring guide type.

In a case in which the guiding surface is provided on the inner peripheral surface of the outer ring, and the guided surface is provided on an outer peripheral surface of the cage, for example, when a straight portion parallel to an axis parallel plane extending along an axis of the rolling bearing is provided on the guided surface, the ratio Ri/Re may be set to be smaller than 0.990.

In a case in which the guiding surface is provided on the outer peripheral surface of the inner ring, and the guided surface is provided on an inner peripheral surface of the cage, for example, when a straight portion parallel to an axis parallel plane extending along an axis of the rolling bearing is provided on the guided surface, the ratio Ri/Re may be set to be smaller than 0.990.

It is preferred that the above-mentioned straight portion comprise a plurality of straight portions provided at equal intervals in the circumferential direction. With this configuration, occurrence of problems such as vibration caused by mass imbalance in the cage and the inner ring can be prevented as much as possible.

Advantageous Effects of Invention

From the foregoing, according to the first invention of the present application, occurrence of the high-speed whirl phenomenon can be effectively prevented regardless of the guide system of the cage or the number of rotations (dmn value) of the bearing.

Further, according to the second invention of the present application, it is possible to achieve the rolling bearing of the raceway ring guide type, which can prevent occurrence of the high-speed whirl phenomenon as much as possible, regardless of whether the rolling bearing is of an inner ring guide type or an outer ring guide type, and regardless of the number of rotations (dmn value) of the bearing.

Brief Description of Drawings

FIG. 1A is a front view of a rolling bearing according to an embodiment of the first invention.

FIG. 1B is a partial side view of a cage that forms the rolling bearing of FIG. 1A.

FIG. 1C is a schematic sectional view taken along the line A-A of FIG. 1B and seen in the direction indicated by the arrows.

FIG. 1D is a partial enlarged side view of the cage that accommodates rolling elements in pockets.

FIG. 2 is an explanatory conceptual view for illustrating how to determine a cage movable area.

FIG. 3 is a graph for showing the movable area and the like of the cage that forms the rolling bearing of FIG. 1A.

FIG. 4A is a graph for showing a movement trajectory of a center of the cage during 10 rotations of an inner ring of the rolling bearing according to the embodiment in which the movable area exhibits the shape shown in FIG. 3.

FIG. 4B is a graph for showing a change in speed (translation speed) of the cage during 10 rotations of the inner ring of FIG. 4A.

FIG. 5 is a graph for showing a movable area and the like of a cage of a rolling bearing as a comparative product that does not have characteristic configurations of the present invention.

FIG. 6A is a graph for showing a movement trajectory of a center of the cage during 10 rotations of an inner ring of the rolling bearing in which the movable area exhibits the shape shown in FIG. 5.

FIG. 6B is a graph for showing a change in speed (translation speed) of the cage during 10 rotations of the inner ring of FIG. 6A.

FIG. 7A is a graph for showing a movable area and the like of a cage of a rolling bearing according to another embodiment of the first invention.

FIG. 7B is a graph for showing a movable area and the like of a cage of a rolling bearing as a comparative product that does not have characteristic configurations of the first invention.

FIG. 8A is a graph for showing a movable area and the like of a cage of a rolling bearing according to another embodiment of the first invention.

FIG. 8B is a graph for showing a movable area and the like of a cage of a rolling bearing as a comparative product that does not have characteristic configurations of the first invention.

FIG. 9A is a graph for showing a movable area and the like of a cage of a rolling bearing according to another embodiment of the first invention.

FIG. 9B is a graph for showing a movable area and the like of a cage of a rolling bearing as a comparative product that does not have characteristic configurations of the first invention.

FIG. 10A is a graph for showing a movable area and the like of a cage obtained during a process of study on the first invention.

FIG. 10B is a graph for showing a movement trajectory of a center of the cage during 10 rotations of an inner ring of a bearing in which the movable area exhibits the shape shown in FIG. 10A.

FIG. 10C is a graph for showing a movable area and the like of a cage obtained during a process of study on the first invention.

FIG. 10D is a graph for showing a movement trajectory of a center of the cage during 10 rotations of an inner ring of a bearing in which the movable area exhibits the shape shown in FIG. 10C.

FIG. 11A is a graph for showing a movable area and the like of a cage obtained during a process of study on the first invention.

FIG. 11B is a graph for showing a movement trajectory of a center of the cage during 10 rotations of an inner ring of a bearing in which the movable area exhibits the shape shown in FIG. 11A.

FIG. 11C is a graph for showing a movable area and the like of a cage obtained during a process of study on the first invention.

FIG. 11D is a graph for showing a movement trajectory of a center of the cage during 10 rotations of an inner ring of a bearing in which the movable area exhibits the shape shown in FIG. 11C.

FIG. 12 is a plan view of a rolling bearing according to an embodiment of the second invention.

FIG. 13 is a sectional view taken along the line A-A of FIG. 12 and seen in the direction indicated by the arrows.

FIG. 14A is a plan view of a cage of the rolling bearing of FIG. 12.

FIG. 14B is a right-hand side view of FIG. 14A.

FIG. 15 is an explanatory conceptual view for illustrating how to determine the cage movable area.

FIG. 16A is a graph for showing a movable area of the cage of the rolling bearing of FIG. 12.

FIG. 16B is a graph for showing a movement trajectory of a center of the cage during 10 rotations of an inner ring of the rolling bearing of FIG. 12.

FIG. 16C is a graph for showing a change in speed (translation speed) of the cage during 10 rotations of the inner ring of the rolling bearing of FIG. 12.

FIG. 17A is a graph for showing a movable area of a cage of a rolling bearing as a comparative product that does not have characteristic configurations of the second invention.

FIG. 17B is a graph for showing a movement trajectory of a center of the cage during 10 rotations of an inner ring of the above-mentioned bearing.

FIG. 17C is a graph for showing a change in speed (translation speed) of the cage during 10 rotations of the inner ring of the above-mentioned bearing.

FIG. 18A is a plan view of a cage in a modification example.

FIG. 18B is a right-hand side view of FIG. 18A.

FIG. 19 is a plan view of an inner ring that forms a rolling bearing according to another embodiment of the second invention.

Description of Embodiments

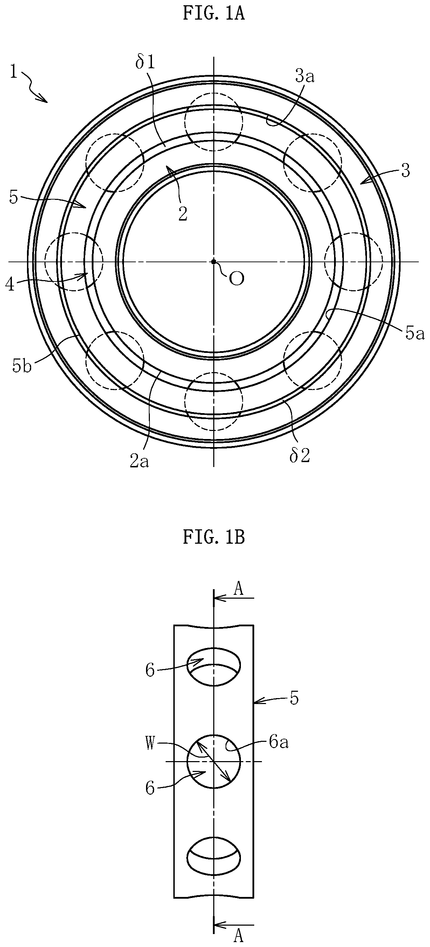

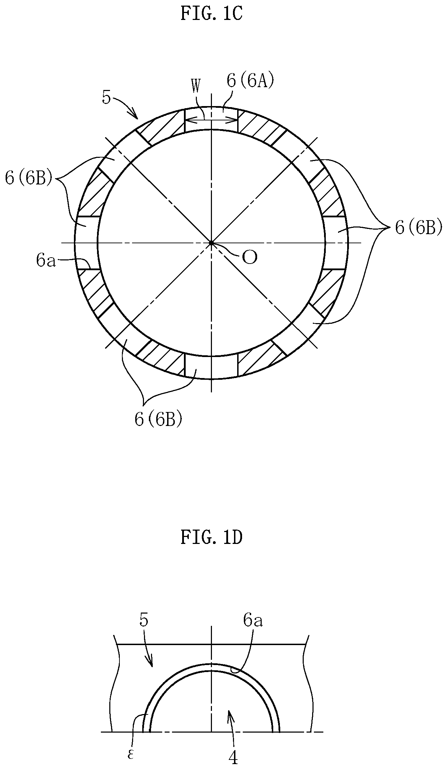

Now, an embodiment of the first invention of the present application is described with reference to the drawings. The terms "axial direction," "radial direction," and "circumferential direction" used below to indicate orientations refer to a direction parallel to an axis O of a rolling bearing 1 illustrated in FIG. 1 and the like, a radial direction of a circle having the axis O as its center, and a circumferential direction of the circle having the axis O as its center, respectively.

FIG. 1A is a front view of the rolling bearing 1 according to the embodiment of the first invention. FIG. 1B is a partial side view of a cage that forms the rolling bearing 1. FIG. 1C is a schematic sectional view taken along the line A-A of FIG. 1B and seen in the direction indicated by the arrows. FIG. 1D is a partial enlarged side view of the cage that accommodates rolling elements in pockets. The rolling bearing 1 is made of a high-rigidity metal material such as bearing steel (high-carbon chromium bearing steel), and is a so-called ball bearing comprising: a pair of raceway rings (inner ring 2 and outer ring 3) arranged so as to be opposed to each other in the radial direction; a plurality of rolling elements (eight balls 4 in this case) interposed in a freely rollable manner between an inner raceway surface formed on an outer peripheral surface 2a of the inner ring 2 and an outer raceway surface formed on an inner peripheral surface 3a of the outer ring 3; and an annular ring-shaped cage 5 that retains the plurality of balls 4 at intervals in the circumferential direction.

The cage 5 has a plurality of pockets 6 corresponding to the number of balls 4, and each pocket 6 accommodates one ball 4. An inner surface (pocket surface) 6a of each pocket 6 is formed into a cylindrical surface having a constant diameter. The cage 5 in the illustrated example is a resin cage formed of an injection-molded product of a resin material. However, depending on required characteristics and the like, as the cage 5, there is sometimes used a cage other than a resin cage, such as a machined cage obtained by cutting a metal material into a predetermined shape, or a press-formed cage obtained by joining a pair of press-formed (punched) cage blanks each formed into a predetermined ring shape.

The cage 5 is incorporated between the inner ring 2 and the outer ring 3 so that a radial clearance is formed between the cage 5 and each of the inner ring 2 and the outer ring 3, and a circumferential clearance is formed between the cage 5 and the ball 4 accommodated in the pocket 6. That is, as illustrated in FIG. 1A, when the cage 5 is located at a neutral position, radial clearances (first radial clearance $\delta 1$ and second radial clearance $\delta 2$), which are also referred to as "guiding clearances," are respectively formed between the outer peripheral surface 2a of the inner ring 2 and an inner peripheral surface 5a of the cage 5 that are opposed to each other, and between the inner peripheral surface 3a of the outer ring 3 and an outer peripheral surface 5b of the cage 5 that are opposed to each other. Further, a circumferential clearance $\varepsilon$, which is also referred to as "pocket circumferential clearance," is formed between the ball 4 and the pocket surface 6a [see FIG. 1D]. This allows the rolling bearing 1 to operate smoothly. In the rolling bearing 1 in the illustrated example, the second radial clearance $\delta 2$ is smaller than the first radial clearance $\delta 1$, and the second radial clearance $\delta 2$ is, for example, 1.2 mm in diameter value. That is, a diameter dimension of the inner peripheral surface 3a of the outer ring 3 is larger by 1.2 mm than a diameter dimension of the outer peripheral surface 5b of the cage 5.

Each pocket 6 is formed of any one of two kinds of pockets different from each other only in circumferential dimension (diameter dimension) W, that is, a large pocket 6A having a relatively large diameter dimension W or a small pocket 6B having a relatively small diameter dimension W. Herein, the pocket 6 arranged at the 0 o'clock position in FIG. 1C is set as the large pocket 6A, and the remaining seven pockets 6 are set as the small pockets 6B. For example, when the ball 4 having a diameter dimension of 9.525 mm is used, the diameter dimension W of the large pocket 6A is set to 9.925 mm, and the diameter dimension of the small pocket 6B is set to 9.725 mm. In this case, the circumferential clearance (pocket circumferential clearance) $\varepsilon$ formed between the pocket surface 6a of the large pocket 6A and the ball 4 is 0.4 mm in diameter value, and the circumferential clearance $\varepsilon$ formed between the pocket surface 6a of the small pocket 6B and the ball 4 is 0.2 mm in diameter value.

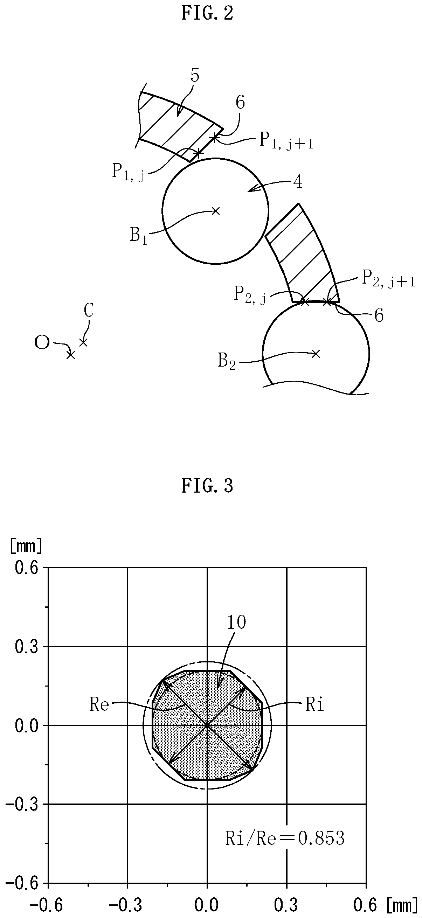

For the rolling bearing 1 having the above-mentioned configuration, there is determined a "cage movable area," that is, an area enclosed by a line connecting outer edges of a scatter diagram obtained by plotting innumerable positions, at which the cage 5 is allowed to exist without contact with the inner ring 2, the outer ring 3, and the balls 4, on a two-dimensional coordinate system. How to determine the positions at which the cage 5 is allowed to exist without contact with the balls 4, which are required for determining the "cage movable area," is described with reference to a conceptual view illustrated in FIG. 2.

FIG. 2 is a conceptual view for illustrating a part of the cage 5 and the two balls 4 accommodated in the pockets of the cage 5 in an extracted manner. The reference symbols O, C, B, and P in FIG. 2 denote a bearing center, a center of the cage 5, a center of the ball 4, and a freely-selected point on a pocket surface (inner surface of the pocket) of the cage 5, respectively. The subscript (suffix) of the reference symbol B and the left-hand character of the subscript of the reference symbol P represent a number of the ball 4, and the right-hand character of the subscript of the reference symbol P represents the j-th point at the time when the pocket surface is discretized (mesh divided).

[First Step]

First, a magnitude (absolute value "d") of a vector from a center $B_i$ of the ball 4 to a freely-selected point $P_{i,j}$ on the inner surface of the pocket 6 accommodating the ball 4 is compared with a radius Dw/2 of the ball 4.

·When the above-mentioned absolute value "d" is larger than the radius Dw/2, it is determined that the point $P_{i,j}$ on the inner surface of the pocket 6 does not interfere with the ball 4.
·When the above-mentioned absolute value "d" is equal to or smaller than the radius Dw/2, it is determined that the point $P_{i,j}$ on the inner surface of the pocket 6 interferes with the ball 4.

The same determination work is then carried out for other points P.

In the example illustrated in FIG. 2, it can be said that a point $P_{1,j}$ and a point $P_{1,j+1}$ on the inner surface of the pocket 6 accommodating the ball 4 having the center denoted by the reference symbol $B_1$ do not interfere with the ball 4, whereas a point $P_{2,j}$ and a point $P_{2,j+1}$ on the inner surface of the pocket 6 accommodating the ball 4 having the center denoted by the reference symbol $B_2$ interfere with the ball 4.

In a case in which f(i,j)=d-Dw/2 is satisfied, when a relational expression of f(i,j)≥0 holds for all "i" and "j", a position of the center C of the cage at that time is determined to be a point on the cage movable area in which the cage 5 is allowed to exist without contact with the ball 4.

[Second Step]

The position of the center C of the cage and a phase of the cage are changed, and the same determination work as the determination work carried out in the first step is carried out. Then, when there is even one phase that is determined to be a "point on the cage movable area" described above at the selected position of the center C of the cage, the selected position of the center C of the cage is determined to be a "point on the cage movable area."

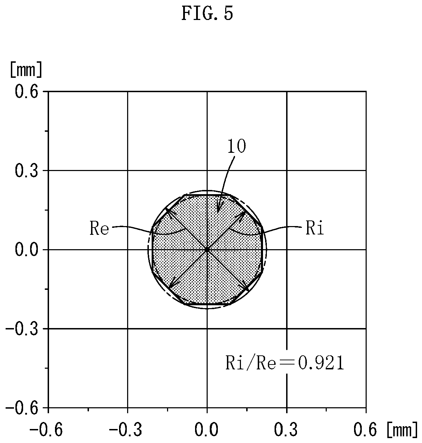

When the ball 4 having the above-mentioned diameter dimension and the cage 5 having the pockets 6 are used, as shown in FIG. 3, a shape of a movable area 10 is a slightly distorted regular octagon, and a ratio (=Ri/Re) of a maximum inscribed circle diameter Ri to a minimum circumscribed circle diameter Re of this movable area 10 is 0.853. Meanwhile, as a comparison to this, only the shape of the cage 5 is partially modified in a rolling bearing, specifically, the cage 5 in which all of eight pockets 6 are formed as the above-mentioned small pockets 6B is incorporated in the rolling bearing 1, and the cage movable area is determined. In this case, the shape of the cage movable area 10 is a substantially regular octagon as shown in FIG. 5, and the ratio (=Ri/Re) of the maximum inscribed circle diameter Ri to the minimum circumscribed circle diameter Re of the cage movable area 10 is 0.921.

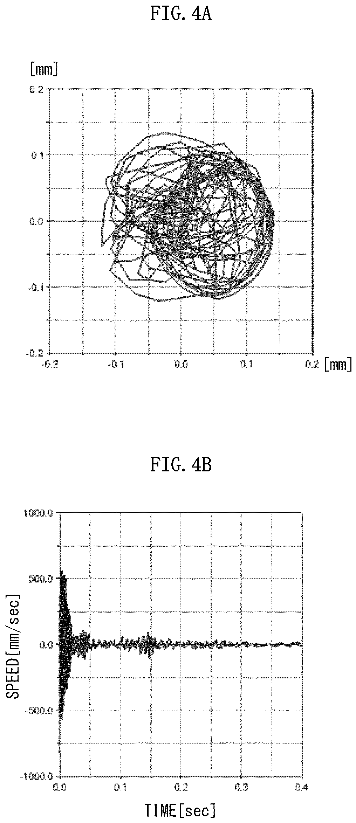

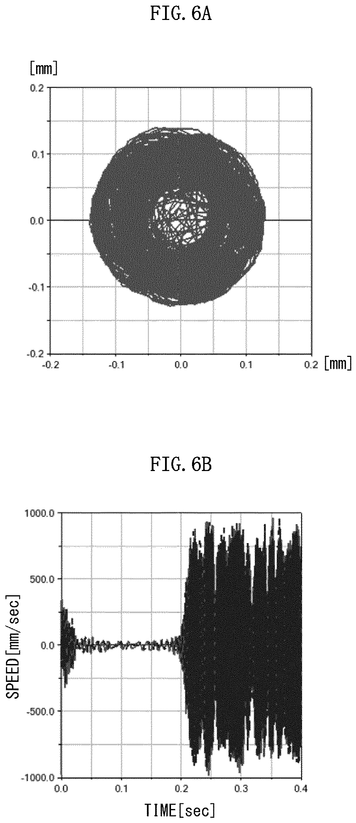

By kinetic analysis, verification was conducted on how the center of each cage follows a movement trajectory and how movement speed (translation speed) of each cage changes when the rolling bearing 1 according to the above-mentioned embodiment and the rolling bearing being a comparative product are operated under the same conditions. FIG. 4A and FIG. 4B respectively show the movement trajectory of the center of the cage and the change in speed (translation speed) during 10 rotations of the inner ring 2 of the rolling bearing 1 according to this embodiment. Further, FIG. 6A and FIG. 6B respectively show the movement trajectory of the center of the cage and the change in speed (translation speed) during 10 rotations of the inner ring of the rolling bearing being the comparative product.

When FIG. 4A and FIG. 6A are compared to each other, the line showing the movement trajectory of the cage is far denser in the rolling bearing being the comparative product than in the rolling bearing 1 according to this embodiment. Further, when FIG. 4B and FIG. 6B are compared to each other, in the rolling bearing 1 according to this embodiment, the translation speed of the cage 5 gradually decreases so as to converge to zero as time passes after the start of operation, whereas in the rolling bearing being the comparative product, the translation speed of the cage rapidly increases after a predetermined period of time has passed after the start of operation, and this high-speed state continues. From the analysis results, it is recognized that a high-speed whirl phenomenon of the cage 5 does not occur in the rolling bearing 1 according to this embodiment, whereas it is recognized that the high-speed whirl phenomenon of the cage occurs in the rolling bearing being the comparative product.

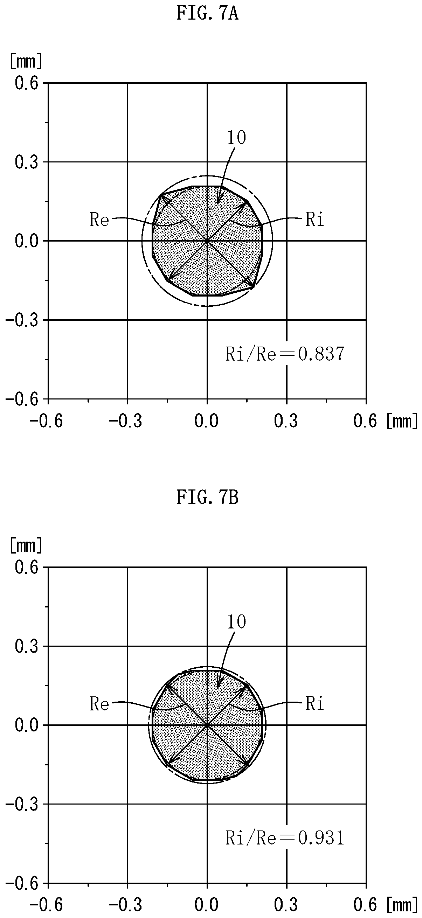

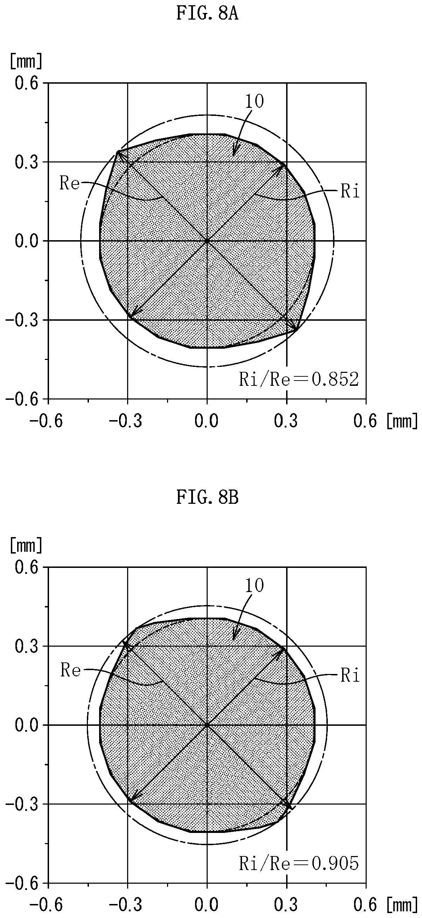

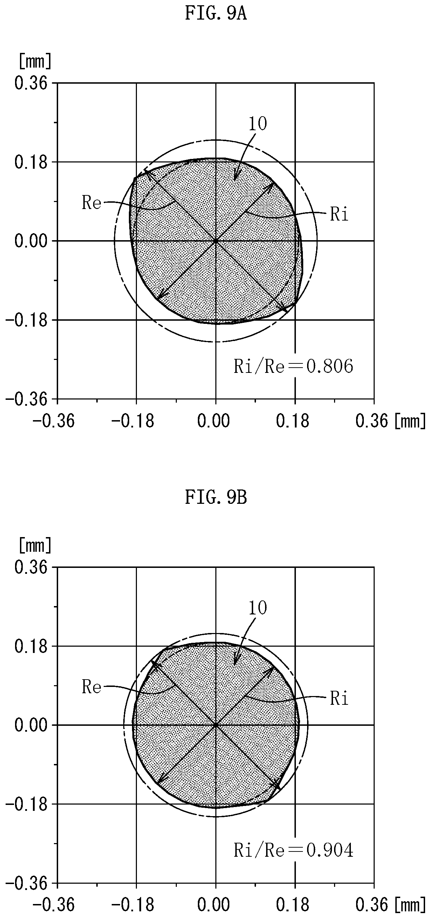

Further, verification was conducted on whether or not the high-speed whirl phenomenon occurs in a rolling bearing that uses a cage with the total number of pockets 6 of 12, 20, or 31, depending on the shape of the cage movable area 10. Specifically, the cage movable area 10 was determined for each of rolling bearings (1) to (6) described below, and the ratio Ri/Re of the maximum inscribed circle diameter Ri of the cage movable area 10 to the minimum circumscribed circle diameter Re of the cage movable area 10 was calculated. The cage movable areas 10 for the rolling bearings (1) to (6) described below, as well as the above-mentioned ratios, are shown in FIG. 7A, FIG. 7B, FIG. 8A, FIG. 8B, FIG. 9A, and FIG. 9B.

(1) A rolling bearing comprising a resin cage with the total number of pockets of 12, in which two pockets are set as large pockets and the remaining pockets are set as small pockets.
(2) A rolling bearing comprising a resin cage with the total number of pockets of 12, in which only one pocket is set as a large pocket and the remaining pockets are set as small pockets.
(3) A rolling bearing comprising a resin cage with the total number of pockets of 20, in which four pockets are set as large pockets and the remaining pockets are set as small pockets.
(4) A rolling bearing comprising a resin cage with the total number of pockets of 20, in which three pockets are set as large pockets and the remaining pockets are set as small pockets.
(5) A rolling bearing comprising a resin cage with the total number of pockets of 31, in which eight pockets are set as large pockets and the remaining pockets are set as small pockets.
(6) A rolling bearing comprising a resin cage with the total number of pockets of 31, in which five pockets are set as large pockets and the remaining pockets are set as small pockets.

Kinetic analysis was conducted on each of the rolling bearings described above, in which the shape of the cage movable area 10 was as shown in FIG. 7A, FIG. 7B, FIG. 8A, FIG. 8B, FIG. 9A, or FIG. 9B. Illustrations of the movement trajectory and the like of the center of the cage in each rolling bearing are omitted. It is recognized that the high-speed whirl phenomenon of the cage does not occur in each of the rolling bearings in which the shape of the cage movable area 10 is as shown in FIG. 7A, FIG. 8A, or FIG. 9A, whereas it is recognized that the high-speed whirl phenomenon of the cage occurs in each of the rolling bearings in which the shape of the cage movable area 10 is as shown in FIG. 7B, FIG. 8B, or FIG. 9B.

From the above description, when the ratio Ri/Re of the maximum inscribed circle diameter Ri of the cage movable area 10 to the minimum circumscribed circle diameter Re of the cage movable area 10 is equal to or smaller than 0.900, that is, when the shape of the cage movable area 10 is formed into a "distorted shape" that deviates from a circle or a regular polygon approximating to a circle, it is considered that occurrence of the high-speed whirl phenomenon of the cage 5 can be effectively prevented. Further, this effect can be achieved simply by forming each of the plurality of pockets 6 in the cage 5 as the large pocket 6A having a relatively large circumferential dimension or as the small pocket 6B having a relatively small circumferential dimension (some pockets are formed as ones having the circumferential dimension W that is larger than the circumferential dimension W of the remaining pockets). Accordingly, the first invention can be widely applied to rolling bearings in general regardless of, for example, the guide system of the cage 5 and the number of rotations (dmn value) of the bearing. As a result, it is possible to achieve the quiet rolling bearing 1 that prevents occurrence of the high-speed whirl phenomenon and is less liable to generate abnormal noise, vibration, and the like.

In the rolling bearing 1 in which the plurality of large pockets 6A are formed in the cage 5 (for example, rolling bearings described in the above-mentioned items (1), (3), and (5)), it is preferred that large pocket groups each comprising an array with one or more large pockets 6A be arranged at equal intervals in the circumferential direction. For example, when the total number of the balls 4 (pockets 6) is 10, the pockets 6 are arranged in the order of large, large, small, small, small, large, large, small, small, and small. With this configuration, occurrence of problems such as vibration caused by mass imbalance in the cage 5 can be prevented as much as possible.

The rolling bearing 1 according to the embodiment of the first invention has been described above, but the first invention is not limited to the embodiment, and various modifications can be made without departing from the gist of the first invention.

For example, instead of the balls 4, rollers (cylindrical rollers, needle rollers, and the like) can be used as the rolling elements that form the rolling bearing 1. That is, the first invention is not limited to ball bearings, but can also be applied to roller bearings such as cylindrical roller bearings and needle roller bearings. Further, the shape of the pocket 6 formed in the cage 5 may be formed into, for example, an oval shape with a long axis arranged along the circumferential direction, in addition to being formed into a circular shape in plan view as illustrated in FIG. 1B. Further, the first invention can be applied not only to single-row bearings but also to double-row bearings.

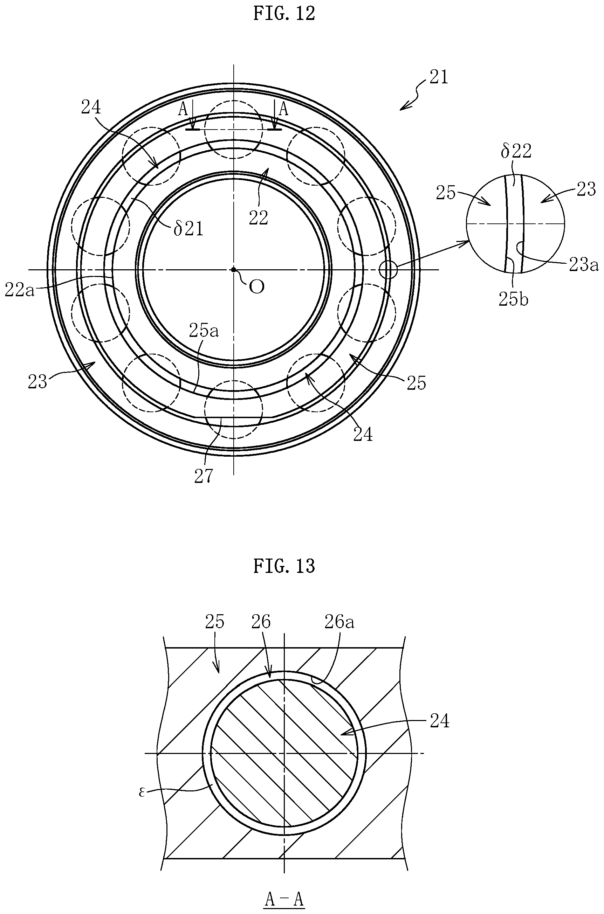

Now, an embodiment of the second invention of the present application is described with reference to the drawings. The terms "axial direction," "radial direction," and "circumferential direction" used below to indicate orientations refer to a direction parallel to a bearing center (axis) O of a rolling bearing 21 illustrated in FIG. 12 and the like, a radial direction of a circle having the axis O as its center, and a circumferential direction of the circle having the axis O as its center, respectively.

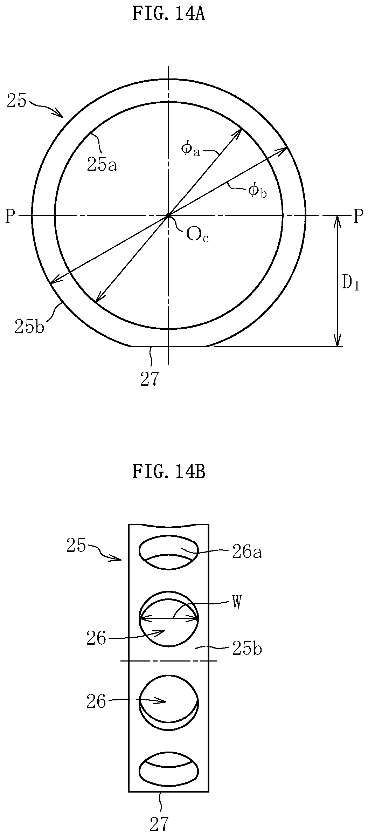

FIG. 12 is a plan view of the rolling bearing 21 according to the embodiment of the second invention. FIG. 13 is a schematic sectional view taken along the line A-A of FIG. 12 and seen in the direction indicated by the arrows. FIG. 14A is a plan view of a cage 25 that forms the rolling bearing 21. FIG. 4B is a right-hand side view of the cage 25. The rolling bearing 21 is made of a high-rigidity metal material such as bearing steel (high-carbon chromium bearing steel), and is a so-called ball bearing comprising a pair of raceway rings (inner ring 22 and outer ring 23) arranged so as to be opposed to each other in the radial direction; a plurality of rolling elements (ten balls 24 in this case) interposed in a freely rollable manner between an inner raceway surface formed on an outer peripheral surface 22a of the inner ring 22 and an outer raceway surface formed on an inner peripheral surface 23a of the outer ring 23; and an annular ring-shaped cage 25 that retains the balls 24 at intervals in the circumferential direction.

The cage 25 has a plurality of (ten) pockets 26 arranged at equal intervals in the circumferential direction, and each pocket 26 accommodates one ball 24. The cage 25 in the illustrated example is a cage in which an inner surface (pocket surface) 26a of each pocket 26 is formed into a cylindrical surface having a constant diameter, that is, a cage in which the shape of the pocket 26 is uniform in the radial direction. The cage 25 is incorporated between the inner ring 22 and the outer ring 23 so that a radial clearance is formed between the cage 25 and each of the inner ring 22 and the outer ring 23 and a circumferential clearance is formed between the cage 25 and the ball 24 accommodated in the pocket 26. That is, as illustrated in FIG. 12, when the cage 25 is located at a neutral position, radial clearances (first radial clearance $\delta21$ and second radial clearance $\delta22$), which are also referred to as "guiding clearances," are respectively formed between the outer peripheral surface 22a of the inner ring 22 and an inner peripheral surface 25a of the cage 25 that are opposed to each other, and between the inner peripheral surface 23a of the outer ring 23 and an outer peripheral surface 25b of the cage 25 that are opposed to each other. Further, a circumferential clearance $\varepsilon$, which is also referred to as "pocket circumferential clearance," is formed between the ball 24 and the pocket surface 26a (see FIG. 13). This allows the rolling bearing 21 to operate smoothly.

In the rolling bearing 21 in the illustrated example, the second radial clearance $\delta22$ is smaller than the first radial clearance $\delta21$, and the second radial clearance $\delta22$ is, for example, 0.8 mm in diameter value. That is, a diameter dimension of the inner peripheral surface 23a of the outer ring 23 is larger by 0.8 mm than a diameter dimension of the outer peripheral surface 25b of the cage 25. Further, the circumferential clearance $\varepsilon$ is, for example, 1.2 mm in diameter value. That is, the diameter dimension W of the pocket 26 [see FIG. 3(b)] is larger by 1.2 mm than the diameter dimension of the ball 24. Therefore, in the rolling bearing 1 according to this embodiment, the second radial clearance $\delta22$ is the smallest among the first radial clearance $\delta21$, the second radial clearance $\delta22$, and the circumferential clearance $\varepsilon$. Thus, in the rolling bearing 21 according to this embodiment, radial movement of the cage 25 is restricted by contact between the outer ring 23, which is the raceway ring, and the cage 25.

As illustrated also in FIG. 14A, when the cage 25 in this embodiment is viewed in plan view, the inner peripheral surface 25a is formed into a perfect circular shape, whereas the outer peripheral surface 25b is formed into a non-perfect circular shape. Here, a straight portion 27 parallel to an axis parallel plane P-P, which includes the axis O of the rolling bearing 1 (center Oc of the cage 25), is formed on one portion of the outer peripheral surface 25b in the circumferential direction, and thus the outer peripheral surface 25b is formed into a non-perfect circular shape. An inner diameter dimension $\varphi a$ of the cage 25 is set to, for example, 42.8 mm, and an outer diameter dimension $\varphi b$ thereof is set to, for example, 51.4 mm when assuming that the outer peripheral surface 25b of the cage 25 has a perfect circular shape. A distance $D_1$ between the above-mentioned axis parallel plane P-P (center Oc of the cage 25) and the straight portion 27 is set to, for example, 25.3 mm. In this case, the straight portion 27 is obtained by chipping away a portion of the outer peripheral surface 25b of the cage 25 in the radial direction by 0.4 mm at the maximum.

The straight portion 27 is formed on the outer peripheral surface 25b of the cage 25, and thus the second radial clearance $\delta 22$ in a circumferential region in which the straight portion 27 is formed is larger than the second radial clearance $\delta 22$ in a circumferential region in which the straight portion 27 is not formed (see FIG. 12).

The cage 25 according to this embodiment having the above-mentioned configuration is a resin cage formed of an injection-molded product of a resin material, and the pockets 26 are molded at the same time as injection molding of the cage 25. The straight portion 27 may be molded at the same time as the injection molding of the cage 25 similarly to the pockets 26, or the straight portion 27 may be formed by machining after the molding. However, depending on applications, required characteristics, and the like, as the cage 25, there is sometimes used a cage other than a resin cage, such as a machined cage obtained by cutting a metal material into a predetermined shape, or a press-formed cage obtained by joining a pair of press-formed (punched) cage blanks each formed into a predetermined ring shape.

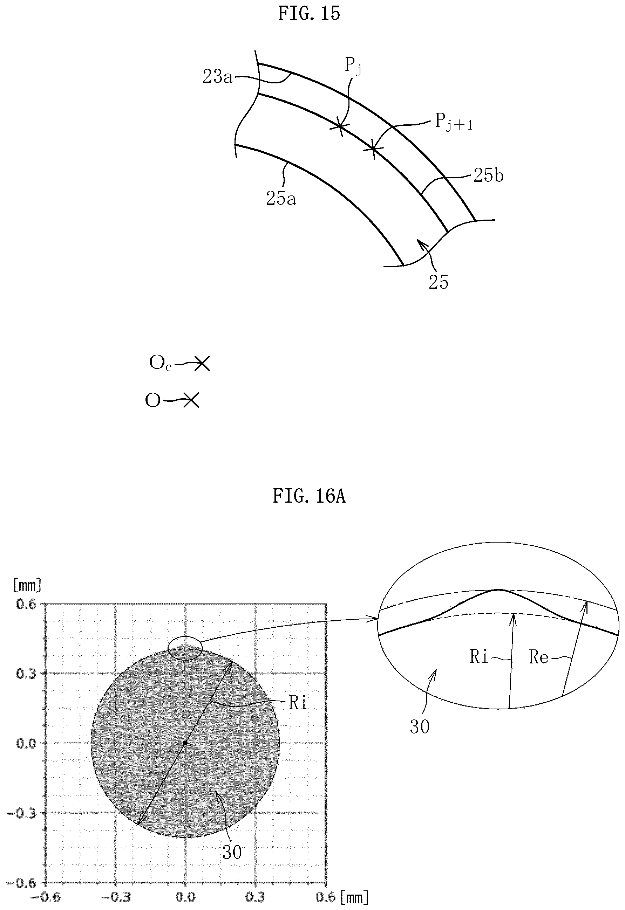

For the rolling bearing 21 having the above-mentioned configuration, there is determined a "cage movable area," that is, an area enclosed by a line connecting outer edges of a scatter diagram obtained by plotting innumerable positions, at which the cage 25 located at a neutral position is allowed to exist without contact with the outer ring 23 (and the inner ring 22), on a two-dimensional coordinate system. As described above, in the rolling bearing 21 according to this embodiment, the second radial clearance $\delta 22$ formed between the outer ring 23 and the cage 25 is smaller than the first radial clearance $\delta 21$ formed between the inner ring 22 and the cage 25, and hence a non-contact state between the cage 25 and the inner ring 22 is also maintained while a non-contact state between the cage 25 and the outer ring 23 is maintained. In short, when the cage 25 is at a position at which the cage 25 is allowed to exist without contact with the outer ring 23, the cage 25 is not in contact with the inner ring 22 (and the balls 24). How to determine the positions at which the cage 25 is allowed to exist without contact with the outer ring 23, which are required for determining the "cage movable area" in the rolling bearing 21 of this embodiment, is described with reference to FIG. 15 and the like.

FIG. 15 is a conceptual view for illustrating a part of the cage 25 and a part of the inner peripheral surface 23a of the outer ring 23 in an extracted manner. As described above, the reference symbols O and Oc in FIG. 15 denote the bearing center and the center of the cage 25, respectively. The reference symbol P denotes a freely-selected point on the outer peripheral surface 25b of the cage 25. The subscript (suffix) of the reference symbol P represents the j-th point when the outer peripheral surface 25b of the cage 25 is discretized (mesh divided).

First, a magnitude (absolute value "d") of a vector from the bearing center O to a freely-selected point $P_j$ on the outer peripheral surface 25b of the cage 25 is compared with a radius "r" of the inner peripheral surface 23a of the outer ring 23.

· When the above-mentioned absolute value "d" is equal to or larger than the radius "r", it is determined that the freely-selected point $P_j$ on the outer peripheral surface 25b of the cage 25 interferes with the outer ring 23.
· When the above-mentioned absolute value "d" is smaller than the radius "r", it is determined that the freely-selected point $P_j$ on the outer peripheral surface 25b of the cage 25 does not interfere with the outer ring 23.

The same determination work is then carried out for other freely-selected points $P_{j+n}$ on the outer peripheral surface 25b of the cage 25.

In the example illustrated in FIG. 15, it can be said that the freely-selected points $P_j$, $P_{j+1}$ on the outer peripheral surface 25b of the cage 25 do not interfere with the outer ring 23.

In a case in which f(j)=d-r is satisfied, when a relational expression of f(j)<0 holds for all "j", a position of the center $O_c$ of the cage at that time is determined to be a point on the cage movable area in which the cage 25 is allowed to exist without contact with the outer ring 23.

Next, the position of the center $O_c$ of the cage and a phase of the cage 25 are changed, and the same determination work as the determination work described above is carried out. Then, when there is even one phase that is determined to be a "point on the cage movable area" described above at the selected position of the center $O_c$ of the cage, the selected position of the center $O_c$ of the cage and the position of the center $O_c$ of the cage is determined to be a "point on the cage movable area."

The shape of a cage movable area 30 of the rolling bearing 21 according to this embodiment, which has the configuration illustrated in FIG. 12 to FIGS. 14, is a shape that is slightly distorted from a perfect circle as shown in FIG. 16A, and a ratio (=Ri/Re) of the maximum inscribed circle diameter Ri to the minimum circumscribed circle diameter Re of this cage movable area 30 is 0.986. Meanwhile, as a comparison to this, there is provided the rolling bearing 21 in which the shape of the cage 26 is partially different, specifically, there is provided the rolling bearing 1 comprising the cage 26 in which the straight portion 27 is formed on one portion of the outer peripheral surface in the circumferential direction and the distance $D_1$ between the straight portion 27 and the center Oc is set to 25.5 mm, and the cage movable area is determined.

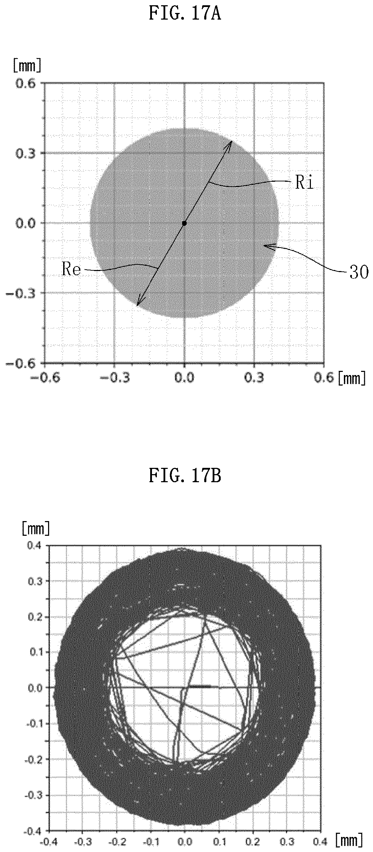

In this case, the shape of the cage movable area 30 is a shape as shown in FIG. 17A, and the ratio (=Ri/Re) of the maximum inscribed circle diameter Ri to the minimum circumscribed circle diameter Re of the cage movable area 10 is 0.990.

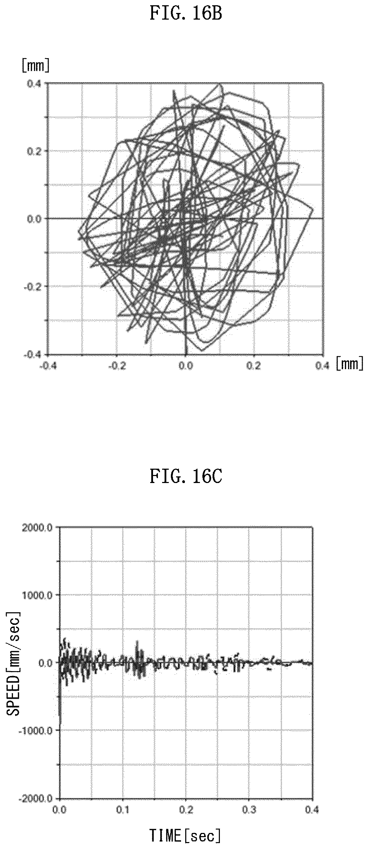

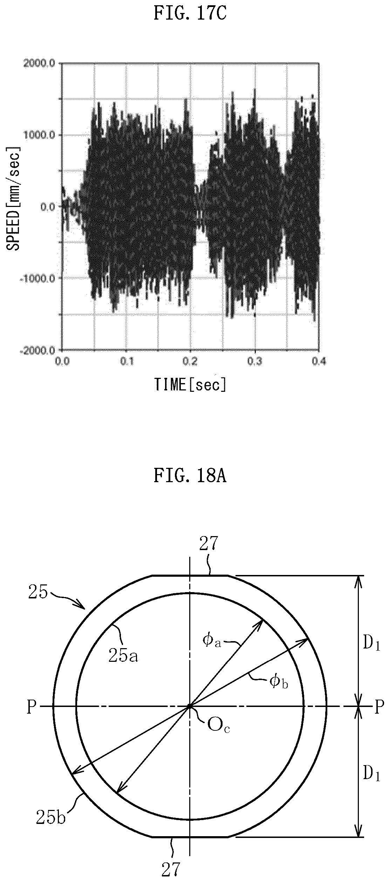

By kinetic analysis, verification was conducted on how the center of each cage follows a movement trajectory and how movement speed (translation speed) of each cage changes when the rolling bearing 21 according to the above-mentioned embodiment and the rolling bearing being a comparative product are operated under the same conditions. FIG. 16B and FIG. 16C respectively show the movement trajectory of the center of the cage and the change in speed (translation speed) during 10 rotations of the inner ring 22 of the rolling bearing 21 according to this embodiment. Further, FIG. 17B and FIG. 17C respectively show the movement trajectory of the center of the cage and the change in speed (translation speed) during 10 rotations of the inner ring of the rolling bearing being the comparative product.

When FIG. 16B and FIG. 17B are compared to each other, the line showing the movement trajectory of the center of the cage is far denser in the rolling bearing being the comparative product than in the rolling bearing 21 according to this embodiment. Further, when FIG. 16C and FIG. 17C are compared to each other, in the rolling bearing 21 according to this embodiment, the translation speed of the cage 25 gradually decreases so as to converge to zero as time passes after the start of operation, whereas in the rolling bearing being the comparative product, the translation speed of the cage rapidly increases after a predetermined period of time has passed after the start of operation, and this high-speed state continues. From the analysis results, it is recognized that a high-speed whirl phenomenon of the cage 25 does not occur in the rolling bearing 21 according to this embodiment, whereas it is recognized that the high-speed whirl phenomenon of the cage occurs in the rolling bearing being the comparative product.

Therefore, when the ratio Ri/Re of the maximum inscribed circle diameter Ri of the cage movable area 30 to the minimum circumscribed circle diameter Re of the cage movable area 30 is smaller than 0.990, that is, when the shape of the cage movable area 30 is formed into a "distorted shape" that deviates from a perfect circular shape, it is considered that occurrence of the high-speed whirl phenomenon of the cage 25 can be effectively prevented. Although it is not possible to determine a detailed reason why forming the shape of the cage movable area 30 into the distorted shape is effective in preventing occurrence of the high-speed whirl phenomenon, such assumption may be made that this is because forming the shape of the cage movable area 30 into the distorted shape causes a direction of a frictional force, which is generated when the guiding surface (inner peripheral surface 23a of the outer ring 23) and the guided surface (outer peripheral surface 25b of the cage 25) come into contact with each other, to deviate from a circular raceway, thereby being incapable of continuously accelerating whirling motion of the cage 25. In other words, in order to cause the high-speed whirl phenomenon, the direction of the force acting on the cage is required to rotate like the hands of a clock and always act as an acceleration of circular motion, and it may be assumed that distorting the shape of the movable area prevents this action.

In order to effectively prevent occurrence of the high-speed whirl phenomenon of the cage 25, as described above, it is only required that the ratio Ri/Re of the maximum inscribed circle diameter Ri to the minimum circumscribed circle diameter Re of the cage movable area 30 be set to smaller than 0.990. However, when this ratio Ri/Re is excessively small, there arise such problems, for example, that the mechanical strength and the like required for the cage 25 cannot be ensured, and that the mass balance of the cage 25 in the circumferential direction is disturbed, and thus the bearing performance of the rolling bearing 21 may be adversely affected. Accordingly, a lower limit value of the above-mentioned ratio Ri/Re is selected as appropriate according to the required characteristics and size.

Further, unlike the technical measures proposed in Patent Literature 1, the above-mentioned technical measures adopted in the rolling bearing 21 according to this embodiment are not provided to intentionally increase the imbalance of the cage. Thus, there is no fear of an increase in centrifugal force or an increase in NRRO of the shaft due to the imbalance even when the present invention is applied to the rolling bearing 21. For this reason, the present invention can be widely applied to rolling bearings of the raceway ring guide type.

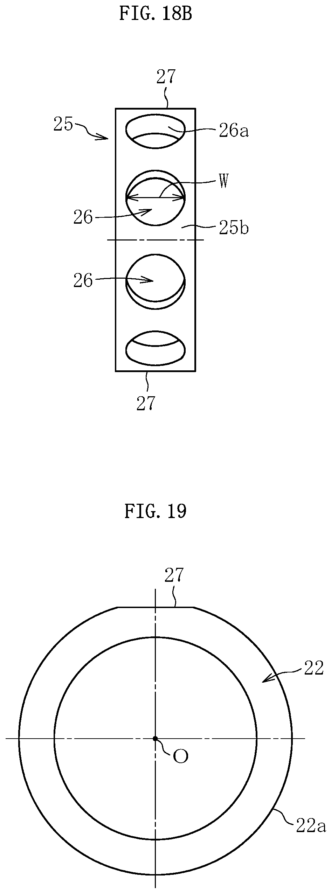

In the embodiment described above, the straight portion 27 is formed on one portion of the outer peripheral surface 25b of the cage 25 in the circumferential direction, but straight portions 27 may be formed on two or more portions in the circumferential direction. FIG. 18A and FIG. 18B are views for illustrating one specific example thereof, and are illustrations of the cage 25 in which straight portions 27 are formed on two portions of the outer peripheral surface 25b opposed to each other across the center Oc (cage 25 in which straight portions 27 are evenly arranged on two portions of the outer peripheral surface 25b) When the straight portions 27 are formed in this manner, it is possible to prevent occurrence of problems such as vibration caused by mass imbalance in the cage 25, and hence it is advantageous for improving reliability of the rolling bearing 21.

The straight portion 27, which is formed to satisfy that the ratio Ri/Re of the maximum inscribed circle diameter Ri of the cage movable area 30 to the minimum circumscribed circle diameter Re of the cage movable area 30 is smaller than 0.990, can be formed on, instead of the outer peripheral surface 25b (guided surface) of the cage 25, the inner peripheral surface 23a (guiding surface) of the outer ring 23 opposed to the outer peripheral surface 25b through intermediation of the second radial clearance δ2. However, when ease of machining and the like are taken into consideration, it is preferred to form the straight portion 27 on the outer peripheral surface 25b of the cage 25.

The rolling bearing 21 according to the embodiment of the second invention described above is of an outer ring guide type in which the inner peripheral surface 23a of the outer ring 23 serves as a guiding surface for guiding the cage 25, but the present invention can be also applied to a rolling bearing of an inner ring guide type in which the outer peripheral surface 22a of the inner ring 22 serves as a guiding surface and the inner peripheral surface 25a of the cage 25 serves as a guided surface. Although an illustration of the rolling bearing of the inner ring guide type is omitted, in this case, for example, as illustrated in FIG. 19, the straight portion 27 is formed on one portion of the outer peripheral surface 22a of the inner ring 22 in the circumferential direction, which is a guiding surface, and thus the ratio Ri/Re of the maximum inscribed circle diameter Ri of the cage movable area 30 to the minimum circumscribed circle diameter Re of the cage movable area 30 is set to smaller than 0.990, thereby being capable of attaining the same operation and effect as those attained with the rolling bearing 21 of the outer ring guide type described above. The straight portions 27 may be formed on two or more portions of the outer peripheral surface 22a of the inner ring 222 in the circumferential direction. However, in this case, it is preferred to arrange the straight portions 27 at equal intervals in the circumferential direction from the viewpoint of preventing occurrence of mass imbalance in the inner ring 22.

In the rolling bearing 21 of the inner ring guide type, the straight portion 27 can be formed on, instead of the outer peripheral surface 22a (guiding surface) of the inner ring 22, the inner peripheral surface 25a (guided surface) of the cage 25 opposed to the outer peripheral surface 22a through intermediation of the first radial clearance $\delta 1$. However, when ease of machining and the like are taken into consideration, it is preferred to form the straight portion 27 on the outer peripheral surface 22a of the inner ring 22.

The rolling bearing 21 according to the embodiment of the second invention has been described above, but the second invention is not limited to the embodiment, and various modifications can be made without departing from the gist of the second invention.

For example, instead of the balls 24, rollers (cylindrical rollers, needle rollers, and the like) can be used as the rolling elements that form the rolling bearing 21. That is, the second invention is not limited to ball bearings, but can also be applied to other publicly known roller bearings such as cylindrical roller bearings and needle roller bearings. Further, the shape of the pocket 26 formed in the cage 25 is sometimes formed into, for example, an oval shape with a long axis arranged along the circumferential direction, in addition to being formed into a perfect circular shape in plan view as illustrated in FIG. 13. Further, the present invention can be applied not only to single-row bearings but also to double-row bearings.

As described above, the first and second inventions of the present application can effectively prevent occurrence of the high-speed whirl phenomena of the cages 5, 25 that form the rolling bearings 1, 21. Thus, the present invention can be particularly preferably applied to rolling bearings for use in, for example, applications in which high-speed whirl phenomena are liable to occur.

For example, rolling bearings (in particular, ball bearings) that support a main shaft of a machine tool or a reaction wheel of a space apparatus are subjected to relatively large axial preload during use. Specifically, in many cases, a ratio (=Fr/Fa) between a radial load Fr and an axial load Fa borne by a bearing during operation is equal to or smaller than 3. In such cases, the high-speed whirl phenomenon is particularly liable to occur. This is because, as arrangement intervals of the rolling elements in the circumferential direction are more constant, the high-speed whirl phenomenon is more liable to occur. Conversely, when the radial load acting on a ball bearing is significantly larger than the axial load (for example, when the above-mentioned ratio Fr/Fa exceeds 3), the rolling elements (balls) lead or lag to cause unevenness of the arrangement intervals of the rolling elements, and hence the high-speed whirl phenomenon is less liable to occur. Therefore, the present invention can be particularly preferably applied to ball bearings for use in applications in which the following formula (1) is satisfied, such as bearings that support a main shaft of a machine tool or a reaction wheel of a space apparatus.

[Formula 1]

$$ {}^{F_r}\!/\!_{F_a} \leq 3.0 \quad \cdot \cdot \cdot (1) $$

Further, the high-speed whirl phenomenon is liable to occur when the following formula (2) is satisfied where Nc (rpm) represents the theoretical number of rotations of the cage, c (mm) represents a pocket clearance, m (kg) represents a mass of the cage, and Q (N) represents an average rolling element load in the bearing. That is, under operating conditions in which the following formula (2) is satisfied, the rolling elements are less liable to slip against the raceway surface of the outer ring (outer raceway surface) due to the centrifugal force of the cage, and hence the arrangement intervals of the rolling elements are less liable to become uneven. Therefore, the first and second inventions of the present application can be preferably applied to rolling bearings that are operated under conditions in which the following formula (2) is satisfied.

[Formula 2]

$$N_c \leq \sqrt{\frac{9000 \cdot Q}{m \cdot c \cdot \pi^2}} \quad \cdot \cdot \cdot \ (2)$$

The theoretical number of rotations Nc of the cage in the above-mentioned formula (2) can be calculated by the following formula (3) where Ni (rpm) represents the number of rotations of the inner ring, Ne (rpm) represents the number of rotations of the outer ring, Dw (mm) represents a diameter of the rolling element, dp (mm) represents a pitch circle diameter of the rolling element, and α (rad) represents a contact angle of the rolling element with a raceway surface.

[Formula 3]

$$N_c = \left( 1 - \frac{D_w}{d_p} \cdot \cos\alpha \right) \cdot \frac{n_i}{2} + \left( 1 + \frac{D_w}{d_p}\cos\alpha \right) \cdot \frac{n_e}{2} \quad \cdot \cdot \cdot \ (3)$$

The rolling bearings 1, 21 according to the first and second inventions of the present application are described above, but the first and second inventions are not limited to the embodiments described above. The first and second inventions of the present application may be implemented in various forms without departing from the gist thereof.

Reference Signs List

| 1, 21 | rolling bearing |
|---|---|
| 2, 22 | inner ring |
| 3, 23 | outer ring |
| 4, 24 | ball (rolling element) |
| 5, 25 | cage |
| 6, 26 | pocket |
| 6a, 26a | pocket surface |
| 10, 30 | cage movable area |
| Re | minimum circumscribed circle diameter |
| Ri | maximum inscribed circle diameter |

**Claims**

1. A rolling bearing, comprising:

   an inner ring and an outer ring configured to rotate relative to each other through intermediation of a plurality of rolling elements; and
   a cage having an annular ring shape and having a plurality of pockets, which are formed at intervals in a circumferential direction, and are configured to accommodate the rolling elements individually and respectively, wherein, when an area enclosed by a line connecting outer edges of a scatter diagram obtained by plotting innumerable positions, at which the cage located at a neutral position is allowed to exist without contact with the inner ring, the outer ring, and the rolling elements, on a two-dimensional coordinate system is defined as a cage movable area, a ratio Ri/Re of a maximum inscribed circle diameter Ri of the cage movable area to a minimum circumscribed circle diameter Re of the cage movable area is equal to or smaller than 0.900.

2. The rolling bearing according to claim 1, wherein each of the plurality of pockets is formed as one of a large pocket and a small pocket that are different from each other in circumferential dimension, thereby setting the ratio Ri/Re to be equal to or smaller than 0.900.

3. The rolling bearing according to claim 2,

   wherein the large pocket comprises a plurality of large pockets, and
   wherein large pocket groups each comprising an array with one or more large pockets are arranged at equal intervals in the circumferential direction.

4. The rolling bearing according to claim 2 or 3, wherein a difference in circumferential dimension between the large pocket and the small pocket is equal to or larger than 0.1 mm.

5. A rolling bearing, comprising:

an inner ring and an outer ring configured to rotate relative to each other through intermediation of a plurality of rolling elements; and

a cage having a plurality of pockets, which are formed at intervals in a circumferential direction, and are configured to accommodate the rolling elements individually and respectively,

the cage comprising an annular guided surface configured to be guided by an annular guiding surface provided on an inner peripheral surface of the outer ring or an outer peripheral surface of the inner ring,

wherein a radial clearance formed between the guiding surface and the guided surface is smaller than a radial clearance formed between a pocket inner surface of the cage and the rolling element, and

wherein, when an area enclosed by a line connecting outer edges of a scatter diagram obtained by plotting innumerable positions, at which the cage located at a neutral position is allowed to exist without contact with the inner ring, the outer ring, and the rolling elements, on a two-dimensional coordinate system, is defined as a cage movable area, a ratio Ri/Re of a maximum inscribed circle diameter Ri of the cage movable area to a minimum circumscribed circle diameter Re of the cage movable area is smaller than 0.990.

6. The rolling bearing according to claim 5, wherein the guiding surface is provided on the inner peripheral surface of the outer ring, the guided surface is provided on an outer peripheral surface of the cage, and a straight portion parallel to an axis parallel plane extending along an axis of the rolling bearing is provided on the guided surface, thereby setting the ratio Ri/Re to be smaller than 0.990.

7. The rolling bearing according to claim 5, wherein the guiding surface is provided on the outer peripheral surface of the inner ring, the guided surface is provided on an outer peripheral surface of the cage, and a straight portion parallel to an axis parallel plane extending along an axis of the rolling bearing is provided on the guiding surface, thereby setting the ratio Ri/Re to be smaller than 0.990.

8. The rolling bearing according to claim 6 or 7, wherein the straight portion comprises a plurality of straight portions provided at equal intervals in the circumferential direction.

## FIG. 1A

## FIG. 1B

FIG. 1C

FIG. 1D

FIG. 2

FIG. 3

FIG. 4A

FIG. 4B

FIG. 5

FIG. 6A

FIG. 6B

FIG. 7A

Ri/Re＝0.837

FIG. 7B

Ri/Re＝0.931

FIG. 8A

FIG. 8B

FIG. 9A

Ri/Re＝0.806

FIG. 9B

Ri/Re＝0.904

FIG. 10A

FIG. 10B

FIG. 10C

FIG. 10D

FIG. 11A

FIG. 11B

FIG. 11C

FIG. 11D

FIG. 12

FIG. 13

A - A

FIG. 14A

FIG. 14B

FIG. 15

FIG. 16A

FIG. 16B

FIG. 16C

FIG. 17A

FIG. 17B

FIG. 17C

FIG. 18A

FIG. 18B

FIG. 19

# INTERNATIONAL SEARCH REPORT

| International application No. |
| --- |
| **PCT/JP2023/027955** |

| | |
| --- | --- |
| **A.** | **CLASSIFICATION OF SUBJECT MATTER** |

***F16C 19/06***(2006.01)i; ***F16C 33/38***(2006.01)i
FI:    F16C33/38; F16C19/06

According to International Patent Classification (IPC) or to both national classification and IPC

| | |
| --- | --- |
| **B.** | **FIELDS SEARCHED** |

Minimum documentation searched (classification system followed by classification symbols)

F16C19/06; F16C33/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | JP 2018-169044 A (NTN TOYO BEARING CO LTD) 01 November 2018 (2018-11-01) entire text, all drawings | 1-8 |
| A | JP 2014-159840 A (NSK LTD) 04 September 2014 (2014-09-04) entire text, all drawings | 1-8 |
| A | WO 2013/081076 A1 (NSK LTD) 06 June 2013 (2013-06-06) entire text, all drawings | 1-8 |

☐ Further documents are listed in the continuation of Box C.     ☑ See patent family annex.

| | |
| --- | --- |
| * | Special categories of cited documents: |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 October 2023** | **17 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/027955**

| Patent document cited in search report | | | Publication date (day/month/year) | Patent family member(s) | | | Publication date (day/month/year) |
|---|---|---|---|---|---|---|---|
| JP | 2018-169044 | A | 01 November 2018 | WO | 2018/181113 | A1 | |
| | | | | entire text, all drawings | | | |
| JP | 2014-159840 | A | 04 September 2014 | (Family: none) | | | |
| WO | 2013/081076 | A1 | 06 June 2013 | US | 2014/0193111 | A1 | |
| | | | | entire text, all drawings | | | |
| | | | | EP | 2787229 | A1 | |
| | | | | CN | 103228938 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011196513 A